(19) Europäisches Patentamt
European Patent Office
Office européen des brevets

(11) EP 2 058 047 A1

(12) EUROPEAN PATENT APPLICATION

(43) Date of publication:
13.05.2009 Bulletin 2009/20

(51) Int Cl.:
$B01D\ 71/02$ (2006.01)　$B01D\ 53/22$ (2006.01)
$C04B\ 35/26$ (2006.01)　$B01J\ 12/00$ (2006.01)
$B01J\ 19/24$ (2006.01)

(21) Application number: 08168334.4

(22) Date of filing: 05.11.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 07.11.2007 US 936351

(71) Applicant: Air Products and Chemicals, Inc.
Allentown, PA 18195-1501 (US)

(72) Inventors:
• Miller, Christopher Francis
Macungie, PA 18062 (US)
• Carolan, Michael Francis
Allentown, PA 18103 (US)

(74) Representative: Westendorp | Sommer
Rumfordstraße 7
80469 München (DE)

(54) Control of Kinetic Decomposition in Mixed Conducting Ion Transport Membranes

(57) Mixed conducting ion transport membrane comprising a multi-component metallic oxide compound represented by the formula $Ln_xA'_{x'}A''_{x''}B_yB'_{y'}O_{3-z}$ wherein (a) Ln is an element selected from the f block lanthanides, A' is selected from Group 2, A'' is selected from Groups 1, 2 and 3 and the f block lanthanides, and B and B' are independently selected from the d block transition metals, excluding titanium and chromium, wherein $0 \leq x < 1$, $0 < x' \leq 1$, $0 \leq x'' < 1$, $0 < y < 1.1$, $0 \leq y' < 1.1$, $x+x'+x''=1.0$, $1.1 > y+y' \geq 1.0$ and z is a number which renders the compound charge neutral, and (b) the average grain size of the multicomponent metallic oxide is in the range of about 4 $\mu$m to about 20 $\mu$m.

FIG. 1

**Description**

STATEMENT REGARDING FEDERALLY SPONSORED

RESEARCH OR DEVELOPMENT

This invention was made with government support under Cooperative Agreement No. DE-FC26-97FT96052 between Air Products and Chemicals, Inc. and the U.S. Department of Energy. The Government may have certain rights to this invention.

BACKGROUND OF THE INVENTION

Mixed conducting ion transport membranes used in gas separation and oxidation processes are formed of mixed metal oxide materials that exhibit both ionic and electronic conductivity at elevated temperatures. Specific applications include the recovery of high-purity oxygen from air and the production of synthesis gas from methane in membrane oxidation reactor systems. These membranes typically comprise perovskites having the general formula $ABO_3$, and specific compositions are selected to provide high rates of oxygen transport, sufficient thermodynamic stability in air and synthesis gas, low creep rates, and sufficiently low chemical expansion, all under the membrane operating conditions.

In the production of synthesis gas in a mixed conducting membrane reactor, low pressure air flows over one side of the membrane (the oxidant side), and reactant gases such as steam, methane, and/or pre-reformed natural gas flow on the other side of the membrane (the reactant side). Permeating oxygen reacts quickly with methane and steam to form at least carbon monoxide and hydrogen, and this rapid reaction results in very low oxygen partial pressures at the membrane surface. A very high oxygen partial pressure gradient thus occurs across the membrane such that the ratio of the oxygen partial pressures on the air side and reactant side of the membrane may be in the range of $10^{18}$ to $10^{10}$. This oxygen partial pressure gradient across the membrane creates a steep oxygen chemical potential gradient through the membrane, and this gradient provides the driving force for the transport of oxygen ions through the membrane.

The change in oxygen chemical potential through the membrane also causes an opposing change in the chemical potentials of the metal components of the mixed-metal oxide membrane material. As a result, the metal components in the form of cations will diffuse to the side of higher oxygen chemical potential, i.e., the air side of the membrane, at relatively low rates countercurrent to the oxygen flux. The rate of cation diffusion is directly related to the ratio of the oxygen partial pressures on the opposite sides of the membrane. When different cation species diffuse at different rates, a concentration gradient of metal species through the membrane will occur wherein the faster-diffusing cations enrich the side of higher oxygen chemical potential and the slower-diffusing cations enrich the side of lower oxygen chemical potential. This phenomenon is defined by the term "kinetic demixing." If the membrane is thermodynamically unable to withstand the changes in cation stoichiometry, the membrane will decompose in a process defined by the term "kinetic decomposition."

As a result of kinetic decomposition due to cation diffusion, secondary phases will form on the outer surfaces of the membrane and possibly within the bulk membrane material, which in turn can reduce membrane performance by affecting surface reactions and/or by forming a resistive barrier to oxygen transport. In addition, mechanical and bulk oxygen anion transport properties may be reduced due to changes in the bulk membrane composition as a result of kinetic demixing and/or kinetic decomposition.

Various approaches have been disclosed to reduce the rate of kinetic decomposition and increase the service life of mixed conducting membranes used in membrane oxidation reactors. In one approach, the membrane composition is selected to maximize thermodynamic stability, for example by altering the elemental composition of the mixed conducting membrane of the general perovskite formula $ABO_3$. Another approach is to reduce the oxygen chemical potential gradient through the membrane by decreasing the ratio of the oxygen partial pressures on the air side and reactant side of the membrane below a critical value. Combinations of these two approaches also may be utilized. A potential drawback of these approaches is that oxygen permeation through the membrane will be decreased by reducing the oxygen chemical potential gradient and may be decreased by the need to select membrane compositions to maximize thermodynamic stability at the expense of oxygen permeability.

There is a need in the art for improved methods to reduce kinetic demixing and kinetic decomposition in mixed-conducting metal oxide membranes that are used in oxidation reactors. This need is addressed by the embodiments of the invention described below and defined by the claims that follow.

BRIEF SUMMARY OF THE INVENTION

An embodiment of the invention relates to a mixed conducting ion transport membrane comprising a multi-component metallic oxide compound represented by the formula $Ln_xA'_{x'}A''_{x''}B_yB'_{y'}O_{3-z}$ wherein

(a) Ln is an element selected from the f block lanthanides, A' is selected from Group 2, A" is selected from Groups 1, 2 and 3 and the f block lanthanides, and B and B' are independently selected from the d block transition metals, excluding titanium and chromium, wherein $0 \leq x < 1$, $0 < x' \leq 1$, $0 \leq x'' < 1$, $0 < y < 1.1$, $0 \leq y' < 1.1$, $x + x' + x'' = 1.0$, $1.1 > y + y' \geq 1.0$ and z is a number which renders the compound charge neutral, and

(b) the average grain size of the multicomponent metallic oxide is in the range of about 4 μm to about 20 μm.

Another embodiment of the invention is directed to a planar ceramic wafer assembly comprising

(a) a planar ceramic channeled support layer having a first side and a second side;

(b) a first dense layer of mixed-conducting multi-component metal oxide material having an inner side, an outer side, and an average grain size in the range of about 4 μm to about 20 μm, wherein portions of the inner side are in contact with the first side of the ceramic channeled support layer;

(c) a first outer support layer comprising porous mixed-conducting multi-component metal oxide material and having an inner side and an outer side, wherein the inner side is in contact with the outer side of the first dense layer,

(d) a second dense layer of mixed-conducting multi-component metal oxide material having an inner side, an outer side, and an average grain size in the range of about 4 μm to about 20 μm, wherein portions of the inner side are in contact with the second side of the ceramic channeled support layer; and

(e) a second outer support layer comprising porous mixed-conducting multi-component metal oxide material and having an inner side and an outer side, wherein the inner side is in contact with the outer side of the second dense layer.

A further embodiment relates to a method of making a planar ceramic membrane module comprising

(a) providing a plurality of green planar ceramic membrane structures, each structure comprising

(1) a planar green ceramic channeled support layer having a first side and a second side;

(2) a first green layer of mixed-conducting multi-component metal oxide material having an inner side and an outer side, wherein portions of the inner side are in contact with the first side of the green ceramic channeled support layer;

(3) a first green outer support layer comprising porous mixed-conducting multi-component metal oxide material and having an inner side and an outer side, wherein the inner side is in contact with the outer side of the first green layer,

(4) a second green layer of mixed-conducting multi-component metal oxide material having an inner side and an outer side, wherein portions of the inner side are in contact with the second side of the green ceramic channeled support layer; and

(5) a second green outer support layer comprising porous mixed-conducting multi-component metal oxide material and having an inner side and an outer side, wherein the inner side is in contact with the outer side of the second green layer; and

(b) assembling the plurality of green planar ceramic membrane structures into a stack by placing a green ceramic spacer between each pair of green planar ceramic membrane structures with a joining compound disposed between adjacent green spacers and green planar ceramic membrane structures, thereby forming a green assembled stack, and

(c) firing the green assembled stack at a combination of time and temperature sufficient to

(1) sinter the green planar ceramic membrane structures to convert the first and second green layers of mixed-conducting multi-component metal oxide material into dense layers of mixed-conducting multi-component metal oxide material having an average grain size in the range of about 4 μm to about 20 μm,

(2) sinter the green spacers, and

(3) join the spacers and planar ceramic membrane structures to form the planar ceramic membrane module.

An alternative embodiment of the invention relates to a hydrocarbon oxidation process comprising

(a) providing a planar ceramic membrane reactor assembly comprising a dense layer of mixed-conducting multi-component metal oxide material, herein the dense layer has a first side, a second side, and an average grain size in the range of about 4 $\mu$m to about 20 $\mu$m; a support layer comprising porous mixed-conducting multi-component metal oxide material in contact with the first side of the dense layer; and a ceramic channeled support layer in contact with the second side of the dense layer;

(b) passing a heated oxygen-containing oxidant feed gas through the ceramic channeled layer and in contact with the second side of the dense layer;

(c) permeating oxygen ions through the dense layer and providing oxygen on the first side of the dense layer;

(d) contacting a heated hydrocarbon-containing feed gas with the support layer wherein the hydrocarbon-containing feed gas diffuses through the support layer; and

(e) reacting the hydrocarbon-containing feed gas with the oxygen to yield a hydrocarbon oxidation product.

BRIEF DESCRIPTION OF SEVERAL VIEWS OF THE DRAWINGS

Fig. 1 is a schematic illustration of the problem of kinetic demixing and kinetic decomposition in mixed-conducting metal oxide membranes.
Fig. 2 is a schematic front view of a membrane wafer stack or module for use in oxidation processes using embodiments of the present invention.
Fig. 3 is a side view of the membrane wafer stack or module of Fig. 1 for use in oxidation processes.
Fig. 4A is a sectional view of a membrane wafer of Figs. 2 and 3.
Fig. 4B is another sectional view of the membrane wafer of Figs. 2 and 3.
Fig. 5 is a photomicrograph of the air-side surface of a mixed-conducting metal oxide membrane of Example 2.
Fig. 6 is a photomicrograph of the air-side surface of a mixed-conducting metal oxide membrane of Example 3.

DETAILED DESCRIPTION OF THE EMBODIMENTS OF THE INVENTION

The embodiments of the present invention are directed towards the reduction of kinetic decomposition of mixed-conducting metal oxide membranes used in membrane oxidation reactor systems. It has been found that increasing the average grain size of the membrane decreases kinetic decomposition rates while having essentially no effect on oxygen diffusion rates. Cation diffusion rates at the grain boundaries are higher, and may be orders of magnitude higher, than the cation diffusion rates in the bulk material within the grains. Membrane material having a smaller average grain size is potentially more susceptible to kinetic decomposition compared to the same material having a larger average grain size. The rate of cation diffusion in the material and the rate of kinetic decomposition of the material thus may be reduced by increasing the average grain size of the membrane materials.
The average grain size of a mixed-conducting metal oxide material is defined as $4*N_L/(3.14157*N_A)$ using the random intercept method assuming spherical grains where $N_L$ is the number of intersections of grain boundaries per unit length of a test line placed on a representative image of the microstructure of the sample and $N_A$ is the number of grains per unit cross sectional area. The average grain size according to this definition is determined as described by ASTM Standard E-112.
The term "dense" refers to a ceramic material through which, when sintered or fired, a gas cannot flow. Gas cannot flow through dense ceramic membranes made of mixed-conducting multi-component metal oxide material as long as the membranes are intact and have no cracks, holes, or imperfections which allow gas leaks. Oxygen ions can permeate dense ceramic membranes made of mixed-conducting multi-component metal oxide material. The term "green" or "green ceramic" means a material comprising ceramic powder before sintering or firing. Green ceramics additionally may comprise any other components such as, for example, organic binders, organic dispersants, solvents, and plasticizers. The term "ceramic" used alone refers to the material after sintering or firing.
An ion transport membrane module is an assembly of a plurality of membrane structures which has a gas inflow region and a gas outflow region disposed such that gas flows across the external surfaces of the membrane structures. Gas flowing from the inflow region to the outflow region of a membrane module changes in composition as it passes across the surfaces of the membrane structures in the module. Each membrane structure has an oxygen-containing gas feed side and a permeate side separated by an active membrane layer or region that allows oxygen ions to permeate therethrough. Each membrane structure also has an interior region and an exterior region. The membrane module may be operated as an oxidation reaction device, wherein the oxygen-containing gas feed side is adjacent the interior region of the membrane structure and the permeate side is adjacent the exterior region of the membrane structure. In this alternative embodiment, a reactant feed gas flows through the exterior region of the membrane structure and reacts with the permeated oxygen. Thus in this embodiment the permeate side is also the reactant gas side of the membrane structure.

The membrane structure may have a planar configuration in which a wafer having a center or interior region and an exterior region is formed by two parallel planar members sealed about at least a portion of the peripheral edges thereof. Oxygen ions permeate through active membrane material that may be placed on either or both surfaces of a planar member. Gas can flow through the center or interior region of the wafer, and the wafer has one or more gas flow openings to allow gas to enter and/or exit the interior region of the wafer. Thus oxygen ions may permeate from the exterior region into the interior region, or conversely may permeate from the interior region to the exterior region.

Alternatively, the membrane structure may have a tubular configuration in which an oxygen-containing gas flows in contact with one side of the tube (i.e., in either the interior region or the exterior region of the tube) and oxygen ions permeate through active membrane material in or on the tube walls to the other side of the tube. The oxygen-containing gas may flow inside or outside of the tube in a direction generally parallel to the tube axis, or conversely may flow over the outer side of the tube in a direction which is not parallel to the tube axis. A module comprises multiple tubes arranged in bayonet or shell-and-tube configurations with appropriate tube sheet assemblies to isolate the feed and permeate sides of the multiple tubes.

Components of a membrane module include an active membrane layer that transports or permeates oxygen ions and may also transport electrons, structural components that support the active membrane layer, and structural components to direct gas flow to and from the membrane surfaces. The active membrane layer typically comprises mixed metal oxide ceramic material and also may comprise one or more elemental metals. The structural components of the membrane module may be made of any appropriate material such as, for example, mixed metal oxide ceramic materials, and also may comprise one or more elemental metals. Any of the active membrane layer and structural components may be made of the same material.

Flow communication means that components of membrane modules and vessel systems are oriented relative to one another such that gas can flow readily from one component to another component.

A wafer is a membrane structure having a center or interior region and an exterior region wherein the wafer is formed by two parallel planar members sealed about at least a portion of the peripheral edges thereof. Active membrane material may be placed on either or both surfaces of a planar member. Gas can flow through the center or interior region of the wafer, i.e., all parts of the interior region are in flow communication, and the wafer has one or more gas flow openings to allow gas to enter and/or exit the interior region of the wafer. The interior region of the wafer may include porous and/or channeled material that allows gas flow through the interior region and mechanically supports the parallel planar members. The active membrane material transports or permeates oxygen ions but is impervious to the flow of any gas.

Oxygen is the generic term for forms of oxygen comprising the element having an atomic number of 8. The generic term oxygen includes oxygen ions as well as gaseous oxygen ($O_2$ or dioxygen). An oxygen-containing gas may include, but is not limited to, air or gas mixtures comprising one or more components selected from the group consisting of oxygen, nitrogen, water, carbon monoxide, and carbon dioxide.

A reactant gas or reactant feed gas is a gas comprising at least one component which reacts with oxygen to form an oxidation product. A reactant gas may contain one or more hydrocarbons, wherein a hydrocarbon is a compound comprising primarily or exclusively hydrogen and carbon atoms. A hydrocarbon also may contain other atoms, such as, for example, oxygen.

Synthesis gas is a gas mixture containing at least hydrogen and carbon oxides.

An ion transport membrane is an active layer of ceramic membrane material comprising mixed metal oxides capable of transporting or permeating oxygen ions at elevated temperatures. The ion transport membrane also may transport electrons as well as oxygen ions, and this type of ion transport membrane typically is described as a mixed-conducting membrane. The ion transport membrane also may include one or more elemental metals thereby forming a composite membrane.

An ion transport membrane system is a generic term for an array of multiple ion transport membrane modules used for oxygen recovery or for oxidation reactions. An ion transport membrane separation system is an ion transport membrane system used for separating and recovering oxygen from an oxygen-containing gas. An ion transport membrane reactor system is an ion transport membrane system used for oxidation reactions.

The membrane modules in the embodiments of the present invention may be fabricated in either tubular or planar configurations as described above. Planar configurations are preferred for many applications, and various configurations of planar membrane modules are possible. Planar membrane module configurations are described, for example, in United States Patent No. 7,279,027, which is wholly incorporated herein by reference.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity.

In developing the embodiments of the present invention, experiments were conducted on specific membrane materials under oxygen chemical potential gradients at oxidation reactor process temperatures, and the results indicated that kinetic decomposition rates are inversely proportional to the square of the average grain size. Kinetic decomposition rates of the membranes were found to decrease by a factor of about four when the average grain size of the membrane was doubled, thereby decreasing decomposition rates to acceptable levels.

Oxidation reactor membranes may comprises perovskites with the general formula $ABO_3$ having both oxygen ion and electronic conductivity at elevated temperatures. Membrane compositions are chosen to provide high rates of oxygen transport, sufficient thermodynamic stability in air and synthesis gas, low creep rates, and sufficiently low chemical expansion, all under the membrane operating conditions.

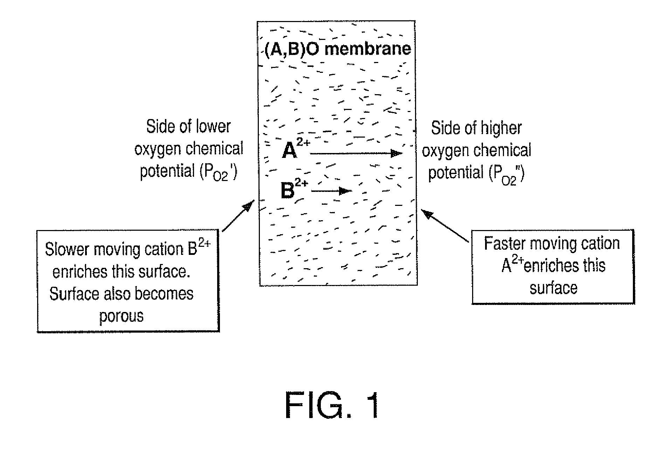

When these membranes are exposed to an oxygen chemical potential gradient, the metal components can demix, and in some cases, the oxides can decompose into a multi-phase system. The phenomenon of kinetic demixing and kinetic decomposition in mixed metal oxide membranes is illustrated in Fig. 1 for the hypothetical ternary oxide (A, B)O. A difference in oxygen partial pressure at opposite sides of a fully dense (A,B)O membrane will create an oxygen chemical potential gradient through this mixed-metal oxide. As given in equation 1 below, the Gibbs-Duhem relationship illustrates that the chemical potentials of the individual components in the oxide material change in parallel wherein a change in the oxygen chemical potential results in an opposing change in chemical potential for cations A and B. In equation (1), $N_i$ is the mole fraction of any component i and $d\mu_i$ is the change in chemical potential of that component, A and B are the metal cations, and O is the oxygen anion.

$$N_A d\mu_A + N_B d\mu_B = - N_O d\mu_O \qquad (1)$$

The oxygen chemical potential gradient induces a vacancy gradient in the cationic sublattice. As a result, a vacancy flux will occur from the side of higher oxygen chemical potential ($P_{O2}$") to the side of lower oxygen chemical potential ($P_{O2}$') where the lattice breaks down and oxygen is released. The hypothetical demixing of a metal oxide MeO where the metal Me has a 2+ valence state is illustrated in equation 2 below

$$V''_{cation} + 2h' + (MeO)_{surface} = \tfrac{1}{2} O_2 + Me^{2+}_{cation} \qquad (2)$$

where $V''_{cation}$ is a cation vacancy, h' is an electron hole, and $O_2$ is diatomic oxygen gas.

Consequently, cations A and B will diffuse to the side of higher oxygen chemical potential to counter the opposing vacancy flux. If cation A has a higher mobility than B (i.e., if the self-diffusion coefficient of A exceeds that of B), cation A will enrich the side of higher oxygen chemical potential and cation B will enrich the side of lower oxygen chemical potential. If cation A has a higher mobility than B, the microstructure of the membrane surface at the side of lower oxygen chemical potential can become porous. This kinetic demixing phenomenon occurs despite the thermodynamic stability of the material under the environmental conditions at both sides of the membrane.

Steady state will be achieved when the ratio of the self-diffusion coefficients of cations A and B equals the inverse of the ratio of their concentration gradients. Equation 3 illustrates the general steady state condition for (A,B)O

$$j_A/c_A = j_B/c_B = v_{st} \qquad (3)$$

where $j_i$ is the flux for component i at a fixed point in the membrane, $c_i$ is its concentration, and $v_{st}$ is the constant diffusion velocity of the oxide system towards the side of higher oxygen chemical potential.

If the constituents of cations A and B are not miscible at all ratios (i.e., the material is not thermodynamically stable at all ratios of A to B), demixing will lead to precipitation of new phases on the outer surfaces of the membrane.

This is the phenomenon of kinetic decomposition in which the homogenous (A,B)O membrane decomposes into a multiphase system such that secondary phases form on the outer surfaces of the membrane and also possibly within the bulk material. This new multiphase system, when compared with the original homogenous mixed-metal oxide, will likely have different physical and chemical properties that can be detrimental to the performance of a membrane used in an oxidation reaction process. The secondary phases that form on the outer surfaces of the membrane potentially will reduce membrane performance by affecting surface reactions and/or forming a resistance barrier for oxygen transport. Similarly, mechanical and bulk transport properties may be affected due to changes in the bulk membrane composition.

The relationship between diffusion rates and membrane thickness is defined by Fick's first law of diffusion given by equation 4

$$J_i = -D_i(d[i]/dx) \qquad\qquad (4)$$

where J is the flux of component i, D is the diffusion coefficient for component i, and d[i]/dx is the concentration gradient of component i through a membrane of thickness x. As such, the kinetic decomposition rates may be reduced by increasing the thickness of the membrane. However, an increase in membrane thickness may compromise membrane performance by reducing oxygen flux. Therefore, increasing membrane thickness to reduce kinetic decomposition rates is often unacceptable. Likewise, kinetic decomposition can be mitigated by reducing the oxygen chemical potential gradient through the membrane, that is, by reducing $P_{O2}"/P_{O2}'$ below a critical value. However, in oxidation processes to make synthesis gas, the oxygen chemical potential gradient is somewhat fixed and necessary to drive oxygen transport at commercially acceptable rates. Therefore, decreasing the oxygen chemical potential gradient through an ITM is often an unacceptable solution to reduce kinetic decomposition rates.

Increasing the average grain size of the membrane material according to embodiments of the present invention is an advantageous method for decreasing kinetic decomposition rates while having essentially no undesirable effects on oxygen diffusion rates. In addition, increasing the average grain size has the added benefit of decreasing creep rates in the membrane material, as it is known that creep rates for polycrystalline ceramic materials typically are inversely proportional to the square (if cation diffusion is limited by bulk diffusion) or cube (if cation diffusion is limited by grain boundary diffusion) of the average grain size. Thus the self-diffusion of cations within larger grains allows the material to creep or yield more slowly to an applied stress compared to materials with smaller grains.

Cation grain boundary diffusion rates typically are orders of magnitude higher than cation bulk diffusion rates. This makes membranes with a smaller average grain size more susceptible to kinetic decomposition compared to those with a larger grain size due to potentially faster cation movement under an oxygen chemical potential gradient. Therefore, the rate of cation diffusion, and thus the rate of kinetic decomposition, can be reduced by increasing the average grain size of the membrane material as described herein. Experiments described below with mixed conducting membranes under an oxygen chemical potential gradient at process temperatures confirm that kinetic decomposition rates are inversely proportional to the square of the grain size. Specifically, kinetic decomposition rates of certain membrane materials were found to decrease by a factor of four when the average grain size of the membrane material was doubled. Membranes for use in oxidation reactions thus can be optimized by increasing the average grain size to reduce kinetic decomposition rates in addition to reducing creep rates.

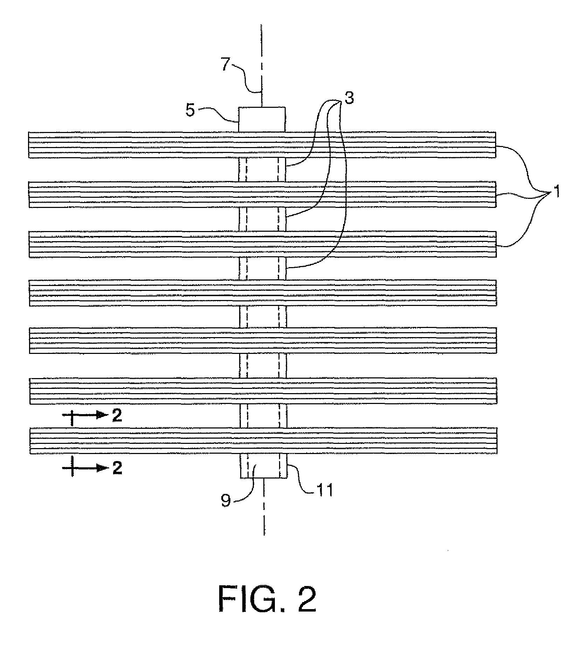

An exemplary planar membrane module is illustrated in Fig. 2, which is a schematic front view of a membrane wafer stack or module for use in oxygen recovery or in oxidation processes according to embodiments of the present invention. The stack or module in this example comprises a plurality of planar wafers 1 separated by hollow spacers 3 and having an optional cap 5. The wafers and spacers are placed and joined in alternating fashion as shown and form stack or module axis 7. The wafers may be any shape in plan view, but square or rectangular shapes are generally preferred. The dimension of any side of a square or rectangular wafer may be between 2 and 45 cm. The number of wafers in a stack may range up to 1000.

The exterior region of the stack or module is that region surrounding the outer surfaces of the wafers and spacer. As described in detail below, wafers 1 have interior regions which are placed in flow communication with the interiors of spacers 3 wherein gas-tight seals are formed between the wafers and spacers. Opening 9 in bottom hollow spacer 11 allows gas to enter and/or exit the interior region of the stack or module wherein the interior region of the module is formed by the interior regions of the wafers and the openings in the hollow spacers. Thus opening 9 is in flow communication with the interior region of the module.

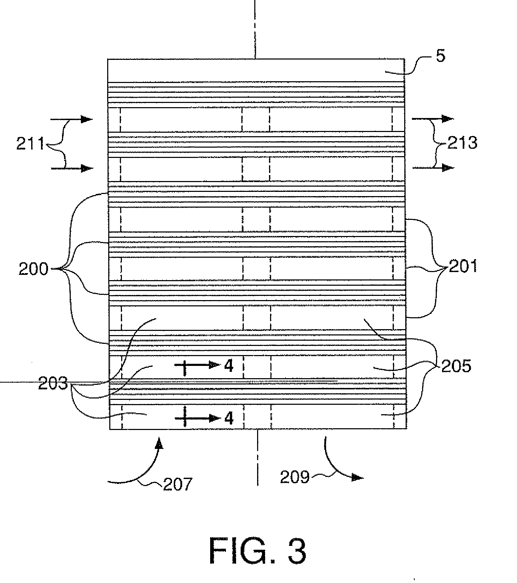

A side view of the module of Fig. 2 is shown in Fig. 3, which illustrates an exemplary configuration for use in oxidation processes. In this example, spacers 201 between wafers 200 each have two separate sets of openings 203 and 205. Openings 203 in spacers 201, and additional openings in spacers disposed above and below spacers 201, form an internal manifold that is in flow communication with the interior regions of the wafers by way of appropriately placed openings (not shown) through the layers of the wafers at the left ends of the wafers. These openings through the layers of the wafers also place the internal openings 203 of spacers 201 and the internal openings in spacers above and below spacers 201 in flow communication with each other. Likewise, openings 205 in spacers 201, and additional openings in spacers disposed above and below spacers 201, form an internal manifold that is in flow communication with the interior regions of the wafers by way of appropriately placed openings (not shown) through the layers of the wafers at the right ends of the wafers. These openings through the layers of the wafers also place the internal openings 205 of spacers 201 and the internal openings in spacers above and below spacers 201 in flow communication with each other.

In this example configuration, gas stream 207 flows upward through the internal manifold formed by openings 203 and openings above them, and then flows horizontally through the interior regions of the wafers. Gas from the interior regions of the wafers then flows downward through the interior manifold formed by openings 205 and openings above them, and exits the module as gas stream 209. A second gas 211 at the gas inflow region of the module flows through the exterior region of the module on either side of spacers 201 and in contact with the outer surfaces of wafers 200. Gas 213, after contacting the outer surfaces of wafers 200, flows through the gas outflow region of the module. The module may operate in a typical temperature range of 600 to 1100 °C.

The module of Fig. 3 may be used as part of an oxidation reactor system wherein representative gas 211 is a reactant gas and representative gas 207 is an oxidant or oxygen-containing gas. The oxygen-containing gas 207 flows through the internal manifold via openings 203 and through the interior regions of the wafers, oxygen permeates the active membrane material in the planar members of the wafers, and oxygen-depleted gas 209 flows from the module via openings 205. Permeated oxygen reacts with reactant components in reactant gas or reactant feed gas 211 as the gas flows over the outer surfaces of the wafers and forms oxidation products. Exit gas 213 from the module contains the oxidation products and unreacted components. In one example embodiment, reactant gas 211 comprises methane or a methane-containing feed gas and exit gas 213 is a mixture of unreacted methane, hydrogen, carbon oxides, and water, oxygen-containing gas 207 is air, and oxygen-depleted gas 209 is enriched in nitrogen and depleted in oxygen relative to gas 207. Typically, the pressure of gases 211 and 213 is higher than the pressure of the gas in the interior region of the module.

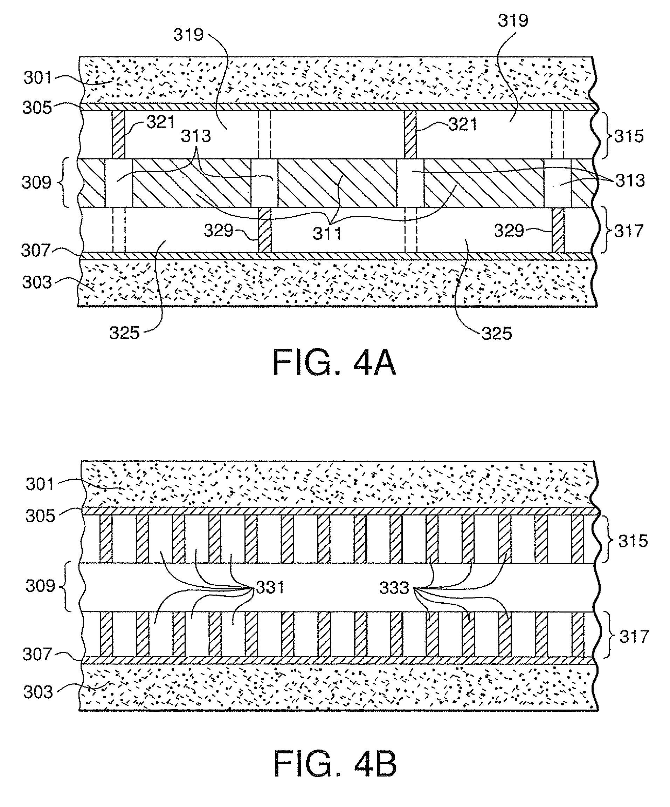

One possible exemplary configuration of the interior regions of the wafers in Figs. 2, and 3 is illustrated in the sectional views of Figs. 4A and 4B. Referring to Fig. 4A, which represents section 2-2 of Fig. 2, the wafer has outer support layers 301 and 303 of porous ceramic material that allows gas flow through the pores. Dense active membrane layers of 305 and 307 are in contact with outer support layers 301 and 303 and are supported by supporting ribs 321 and 329 which are part of flow channel layers 315 and 317. These ribs are in turn supported by slotted support layer 309 that has openings or slots 313 for gas flow. Open channels 319 and 325 are in flow communication via openings or slots 313. Optionally, support layers 301 and 303 may not be required when the module of Fig. 2B is used for recovering oxygen from an oxygen-containing gas.

The term "dense" refers to a ceramic material through which, when sintered or fired, a gas cannot flow. Gas cannot flow through dense ceramic membranes made of mixed-conducting multi-component metal oxide material as long as the membranes are intact and have no cracks, holes, or imperfections which allow gas leaks. Oxygen ions can permeate dense ceramic membranes made of mixed-conducting multi-component metal oxide material at elevated temperatures, typically greater than 600°C.

Fig. 4B, which represents section 4-4 of Fig. 3, illustrates a wafer section rotated 90 degrees from the section of Fig. 4A. This section shows identical views of outer support layers 301 and 303 and of dense active membrane material layers 305 and 307. This section also shows alternate views of slotted support layer 309 and flow channel layers 315 and 317. Open channels 331 are formed between alternating supporting ribs 333 and allow gas flow through the interior region of the wafer. The interior region of the wafer is therefore defined as the combined open volume within flow channel layer 315, flow channel layer 317, and slotted support layer 309.

The dense active membrane layers 305 and 307 may comprise compound represented by the formula $Ln_xA'_{x'}A''_{x''}B_yB'_{y'}O_{3-z}$ wherein Ln is an element selected from the f block lanthanides, A' is selected from Group 2, A" is selected from Groups 1, 2 and 3 and the f block lanthanides, and B and B' are independently selected from the d block transition metals, excluding titanium and chromium, wherein $0 \leq x < 1$, $0 < x' \leq 1$, $0 \leq x'' < 1$, $0 < y < 1.1$, $0 \leq y' < 1.1$, $x+x'+x''=1,0$, $1.1 > y+y' > 1.0$ and z is a number which renders the compound charge neutral. In a more specific embodiment, dense active membrane layers 305 and 307 may comprise a mixed metal oxide ceramic material containing at least one mixed-conducting multi-component metal oxide compound having the general formula $(La_xCa_{1-x})_y FeO_{3-\delta}$ wherein $1.0 > x > 0.5$, $1.1 \geq y > 1.0$, and $\delta$ is a number which renders the composition of matter charge neutral. These dense active membrane layers may have an average grain size in the range of about 4 microns to about 20 microns.

Any appropriate material can be used for porous support layers 301 and 303, and this material may be, for example, a ceramic material having the same composition as that of active membrane layers 305 and 307. Preferably, porous support layers 301 and 303 are mixed-conducting multi-component metal oxide material. Any appropriate material can be used for the structural members of slotted support layer 309 and flow channel layers 315 and 317, and this material may be, for example, a ceramic material having the same composition as that of active membrane layers 305 and 307. The material of channeled support layer preferably is a dense ceramic material. In one embodiment, active membrane layers 305 and 307, porous support layers 301 and 303, slotted support layer 309, and flow channel layers 315 and 317 all may be fabricated of material having the same composition.

The average grain size in a completed component made of mixed-conducting multi-component metal oxide material is a function of the method of making the component and the process parameters of that method. The most widely-used method is the traditional ceramic process in which mechanically-mixed powders of metal oxides and/or carbonates are fired to effect high-temperature solid-state reactions between the powder particles and produce homogenous or nearly homogenous powders with the metal cations mixed on the atomic scale. The homogenous powders are then milled to a desired particle size using ball milling, attrition milling, jet milling or similar techniques. Other fabrication methods are possible such as, for example, gel casting, amorphous citrate or Pechini process, spray pyrolysis, freeze drying, glycine nitrate combustion, sol-gel, self-propagation reactions, co-precipitation, hydrothermal crystallization, and compound decomposition. Any of these methods may be used in embodiments of the present invention to yield solid mixed conducting multi-component metal oxide materials in active membrane layers 305 and 307 having an average grain size in the desired range described herein.

The average grain size in a ceramic component after firing may be a function of any parameters that include, for example, powder particle size; grain size distribution; homogeneity of initial particle size or the degree of agglomeration; green density; the presence of second phases that act as grain growth inhibitors; the presence of additives that enhance grain growth; type of solvent; type of dispersant; type of binder; type of plasticizer; concentrations of these components in slurries, slips, or tapes; forming method; parameters used in the forming method, such as pressure used in isostatic forming of the green components (if used); firing temperature; firing time; and time-temperature profiles during the firing process. Combinations of these parameters during fabrication may be selected to yield the desired average grain size in active membrane layers 305 and 307 in the range of about 4 microns to about 20 microns. One method to increase the grain size is to sinter at a higher temperature than the temperature needed to achieve densification. A second method to increase grain size is to hold for a longer time at the sintering temperature to allow additional time for the grains to grow.

General methods for making the components described above with reference to Figs 2, 3, 4A, and 4B are described in United States Patent No. 7,279,027 B2, which is wholly incorporated herein by reference. These general methods may be used with embodiments of the present invention in the fabrication of the wafers of Figs. 4A and 4B and the modules or stacks of Figs. 2 and 3 wherein the material in dense layers 305 and 307 has the desired the average grain size in the range of about 4 microns to about 20 microns. There is an upper limit on average grain size because the mechanical strength of the mixed conducting multi-component metal oxide material decreases as the average grain size increases. The average grain size in dense layers 305 and 307 should be selected, therefore, to minimize kinetic decomposition rates of the dense membrane layers and to yield the required mechanical properties of the dense layers to ensure the mechanical integrity of the completed wafer.

In a first exemplary fabrication method, wafers described in Figs. 4A and 4B may be fabricated by assembling green ceramic precursor layers of the dense active membrane layers 305 and 307, outer support layers 301 and 303, support layer forming supporting ribs 321 and 329, and slotted support layer 309 to form a green wafer. The green wafer is fired to sinter and join the wafer components to form a completed wafer. Firing temperatures may be in the range of 1000-1600°C and hold times at the maximum temperature may range from 0.5 to 12 hours; a specific firing time and temperature profile is selected to effect the proper sintering and joining of the components in the wafer. The properties of the green active membrane layers 305 and 307 are selected so that the desired average grain size in the range of about 4 microns to about 20 microns is obtained in these layers with the selected firing time and temperature profile used in firing the wafers. The properties of the green active membrane layers 305 and 307 may be determined by the proper selection of the parameters including, but not limited to, any of the following: powder particle size, type of solvent, type of dispersant, type of binder, type of plasticizer, concentrations of these components in slurries, slips, or tapes, and pressure applied in isostatic forming of the green components (if used). The completed fired wafers then may be assembled into stacks or modules using green spacers and appropriate joining compounds as described above with reference to Figs. 2 and 3. The assembled stack is then fired with a selected firing time and temperature profile to make the final stack or module. This profile may be the same as or different than the profile used in firing the wafers.

In a second exemplary fabrication method, wafers described in Figs. 4A and 4B may be fabricated by forming each wafer from green ceramic precursor layers of the dense active membrane layers 305 and 307, outer support layers 301 and 303, support layers forming supporting ribs 321 and 329, and slotted support layer 309. The green wafers may be assembled with green spacers and joining compounds to form green stacks as shown in Figs. 2 and 3. The green stacks are fired to sinter and join the components to form completed stacks. Firing temperatures may be in the range of 1000-1600°C and firing times may be between 0.5 and 12 hours; a specific firing time and temperature profile is selected to effect the proper sintering and joining of all components in the stacks. The properties of the green active membrane layers 305 and 307 are selected so that the desired average grain size in the range of about 4 microns to about 20 microns is obtained in these layers with the selected firing time and temperature profile used in firing the stacks. The properties of the green active membrane layers 305 and 307 may be determined by the proper selection of the parameters including, but not limited to, any of the following: powder particle size; grain size distribution; homogeneity of initial particle size or the degree of agglomeration; green density; the presence of second phases that act as grain growth inhibitors; the presence of additives that enhance grain growth; type of solvent; type of dispersant; type of binder; type of plasticizer; concentrations of these components in slurries, slips, or tapes; forming method; and parameters used in the forming method, such as pressure applied in isostatic forming of the green components (if used).

Other membrane module and stack designs can be envisioned for use with the present embodiments wherein the material in the active dense membrane layers has an average grain size in the range of about 4 microns to about 20 microns. The module geometry need not be limited to the specific planar geometry described above, and other planar membrane geometries are possible. Alternatively, the modules may be fabricated with cylindrical membrane geometries. For example, the active membrane layers may be applied on the inner surfaces of porous cylindrical support tubes that are mounted in appropriate tube sheets for the desired gas flows. The embodiments of the invention thus may be applied to the active dense layers in any membrane module geometry such that the dense layer has an average grain size the desired range.

The membrane modules of the embodiments described above may be utilized in oxidation reactors for the production of synthesis gas wherein the active dense membrane layers are resistant to kinetic decomposition by virtue of having an average grain size in the desired range as described above. In an exemplary hydrocarbon oxidation process, a planar ceramic membrane reactor assembly is provided which comprises a dense layer of mixed-conducting multi-component metal oxide material, wherein the dense layer has a first side, a second side, and an average grain size in the range of about 4 $\mu$m to about 20 $\mu$m as described above; a support layer comprising porous mixed-conducting multi-component metal oxide material in contact with the first side of the dense layer; and a ceramic channeled support layer in contact with the second side of the dense layer. A plurality of these membrane reactor assemblies may be formed into modules, and multiple modules may be installed and arranged in series in a reactor vessel as described in U.S. Patent 7,179,323 B2, which is wholly incorporated herein by reference.

A heated oxygen-containing oxidant feed gas is passed through the ceramic channeled layer and in contact with the second side of the dense layer, and oxygen ions permeate through the dense layer and provide oxygen on the first side of the dense layer. A heated hydrocarbon-containing feed gas is contacted with the support layer wherein the hydrocarbon-containing feed gas diffuses through the support layer, the hydrocarbon-containing feed gas reacts with the oxygen to yield a hydrocarbon oxidation product.

The hydrocarbon-containing feed gas may comprise one or more hydrocarbon compounds containing between one and six carbon atoms, and the oxygen-containing oxidant feed gas may be selected from the group consisting of air, oxygen-depleted air, and combustion products containing oxygen, nitrogen, carbon dioxide, and water. The hydrocarbon oxidation product may comprise oxidized hydrocarbons, partially oxidized hydrocarbons, hydrogen, and water.

The following Examples illustrate embodiments of the present invention but do not limit embodiments of the invention to any of the specific details described therein.

EXAMPLE 1

Membrane disks with a composition of $(La_{0.90}Ca_{0.10})_{1.00}FeO_{3-z}$, where z is a number to make the compound charge neutral, were prepared by known powder preparation techniques wherein the specified parts by weight of the respective metallic oxides or carbonates were vibratory milled together for 72 hr. This mixture of metallic oxides and carbonates was fired in air at 1200°C for 10 hr and then ground by vibratory milling for 72 hr to yield a powder. Two hundred and fifty (250.0) grams of $La_{0.90}Ca_{0.10}FeO_3$ powder with a surface area of 2.0 $m^2$/g were added to a one liter high-density polyethylene (HDPE) jar with 250 grams yttria partially-stabilized tetragonal polycrystalline zirconia (Y-TZP) spherical media, 72.8 grams reagent-grade toluene, 18.2 grams denatured ethanol (Synasol PM-509 from Ashland Chemical), and 1.25 grams polyvinyl butryal (PVB) dispersant (grade B-79 from Solutia). The slurry was put on a paint shaker for 30 minutes to disperse the ceramic powder. Plasticizer (9.64 grams grade S-160 butyl benzyl phthalate (BBP) from Ferro) and binder (18.04 grams B-98 PVB from Solutia) were added and the slip put back on the paint shaker for one hour to dissolve the binder. The slip was then mixed for 16 hours on a ball mill before filtering, de-airing, and casting with a doctor blade on a polyester sheet to make a green ceramic joining tape with a thickness of 250 $\pm$ 25 microns after drying. The dried tape had a solids content of 60 vol. % with a ratio of binder to plasticizer of 2.0 on a mass basis.

The slip was cast into a tape and dried using conventional methods. Circular sections were cut from the tape using standard methods to form green membrane disk samples. If necessary, several circular sections were laminated together to form a solid-state membrane having sufficient thickness. The green solid-state membranes were fired in air to remove the plasticizer, binder, and solvent, and each membrane was sintered either at 1450°C for 8 hr to produce a salid-state membrane having an average grain size of 4 $\mu$m or by sintering at 1500°C for 24 hr to produce a solid-state membrane having an average grain size of 8 $\mu$m. The average grain size was determined by using procedures described in ASTM Standard E-112.

EXAMPLE 2

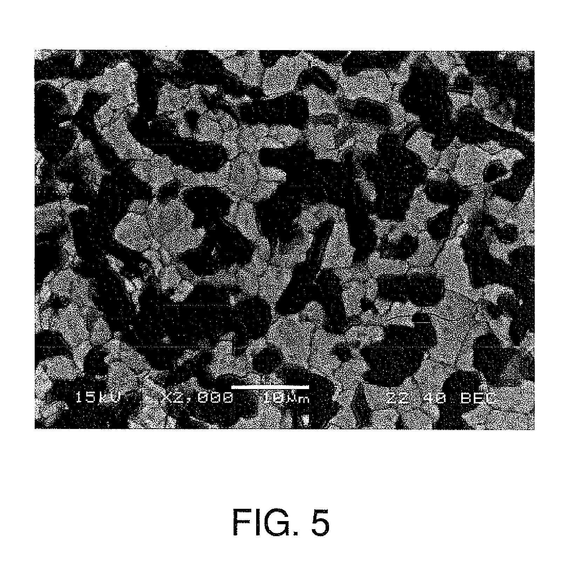

A membrane disk prepared by the method of Example 1 was attached to an alumina tube with a Corning 1720 glass ring between the membrane and the alumina tube. The molar composition of the Corning 1720 glass was 58.4% $SiO_2$, 12.0% $Al_2O_3$, 3.54% $B_2O_3$, 6.59% CaO, 18.3% MgO and 0.994% $Na_2O$. The composition of the membrane was $(La_{0.90}Ca_{0.10})_{1.00}FeO_{3-z}$ where z is a number to make the compound charge neutral. The membrane sample was in the form of a flat disk with a diameter of 0.75 in, had a nominal thickness of 225 $\mu$m, and had an average grain size of 4 $\mu$m. The membrane assembly was heated to 950°C at 1°C/min with He flowing on the permeate side of the membrane at 200 sccm, and the temperature and He flow were maintained for 3 days to soften the glass and to form a seal. After this time, the He was replaced with a mixture of 75% $H_2$, 17% $CO_2$ and 8% $CH_4$ (all in mole %) at 200 sccm, and air was introduced on the opposite side of the membrane at 300 sccm. The final flow conditions and temperature were maintained for 500 hr, and the reactor was then cooled to room temperature at 1°C/min. The air-side surface of the tested membrane was analyzed by scanning electron microscopy (SEM) to assess kinetic decomposition, and the SEM image from this analysis is shown in Fig. 5. The dark secondary phases are products of kinetic decomposition on the air-side surface of the membrane.

EXAMPLE 3

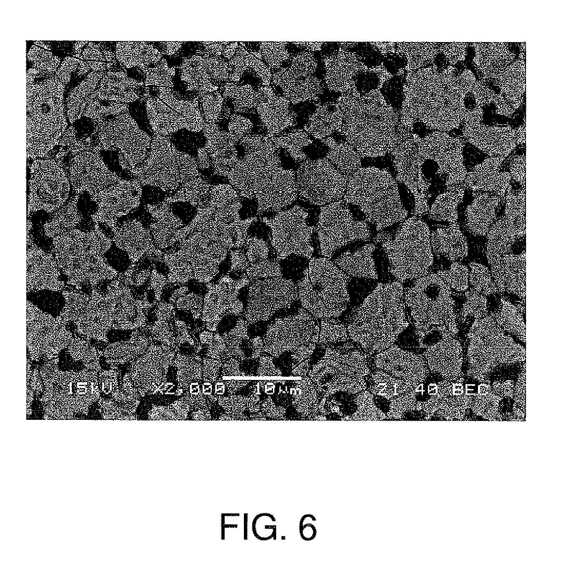

A membrane disk was prepared by the method of Example 1 having the same composition of $(La_{0.90}Ca_{0.10})_{1.00}FeO_{3-z}$ and the same form of a flat disk having a diameter of 0.75 in and a nominal thickness of 225 $\mu$m, but the average grain size of this membrane was 8 $\mu$m. The sample disk was attached to an alumina tube with a Corning 1720 glass ring between the membrane and the alumina tube and loaded in the reactor using the same method described in Example 2, and the sample was subjected to the experimental procedures and conditions described in Example 2. After the 500 hr of permeation testing at 950°C, the reactor was cooled, and the air-side surfaces of the tested membrane were analyzed by SEM to assess kinetic decomposition. The SEM image of this membrane is shown in Fig. 6, in which the dark secondary phases are products of kinetic decomposition on the air-side surface of the membrane.

The thicknesses of these secondary phases on the air-side surfaces of the membrane samples of Examples 2 and 3 were determined by analyzing four randomly chosen cross-sections near the air-side surface of each membrane, and the area-percent coverage of secondary phases was determined by analyzing eight randomly chosen areas on the air-side surface of each membrane. The volume of decomposition product on the air-side surface of each membrane was then determined from the product of the area coverage and thickness of the secondary phases.

The results indicated that approximately four times more kinetic decomposition product was present on the membrane of Example 2 having the average grain size of 4 $\mu$m than on the membrane of Example 3 having the average grain size of 8 $\mu$m. This indicates that the cation grain boundary diffusion rates are inversely proportional to the square of the grain size and illustrates that kinetic decomposition rates can be reduced by increasing the average grain size of membrane material. The oxygen fluxes through the membranes of Example 2 and Example 3 were essentially the same under identical test conditions at 950°C, which indicates that average grain size has essentially no effect oxygen flux.

The invention further relates to the following Items

    1. A mixed conducting ion transport membrane comprising a multi-component metallic oxide compound represented by the formula $Ln_xA'_{x'}A''_{x''}B_yB'_{y'}O_{3-z}$ wherein

        (a) Ln is an element selected from the f block lanthanides, A' is selected from Group 2, A'' is selected from Groups 1, 2 and 3 and the f block lanthanides, and B and B' are independently selected from the d block transition metals, excluding titanium and chromium, wherein $0 \leq x < 1$, $0 < x' \leq 1$, $0 \leq x'' < 1$, $0 < y < 1.1$, $0 \leq y' < 1.1$, $x + x' + x'' = 1.0$, $1.1 > y + y' \geq 1.0$ and z is a number which renders the compound charge neutral, and

        (b) the average grain size of the multicomponent metallic oxide is in the range of about 4 $\mu$m to about 20 $\mu$m.

    2. The mixed conducting ion transport membrane of Item 1 wherein the multi-component metallic oxide compound is represented by the formula $(Ln_xCa_{1-x})_yFeO_{3-z}$ wherein Ln is La or a mixture of lanthanides comprising La, $1.0 > x > 0.5$, and $1.1 \geq y \geq 1.0$.

    3. A planar ceramic membrane assembly comprising a dense layer of mixed-conducting multi-component metal oxide material, wherein the dense layer has a first side, a second side, and an average grain size in the range of about 4 $\mu$m to about 20 $\mu$m; a porous layer of mixed-conducting multi-component metal oxide material in contact with the first side of the dense layer; and a ceramic channeled support layer in contact with the second side of the dense layer.

4. The planar ceramic membrane assembly of Item 3 wherein the dense layer and the porous layer are formed of multi-component metal oxide material with the same composition.

5. The planar ceramic membrane assembly of Item 3 wherein the dense layer, the channeled support layer, and the porous layer are formed of multi-component metal oxide material with the same composition.

6. A planar ceramic wafer assembly comprising

(a) a planar ceramic channeled support layer having a first side and a second side;

(b) a first dense layer of mixed-conducting multi-component metal oxide material having an inner side, an outer side, and an average grain size in the range of about 4 $\mu$m to about 20 $\mu$m, wherein portions of the inner side are in contact with the first side of the ceramic channeled support layer;

(c) a first outer support layer comprising porous mixed-conducting multi-component metal oxide material and having an inner side and an outer side, wherein the inner side is in contact with the outer side of the first dense layer,

(d) a second dense layer of mixed-conducting multi-component metal oxide material having an inner side, an outer side, and an average grain size in the range of about 4 $\mu$m to about 20 $\mu$m, wherein portions of the inner side are in contact with the second side of the ceramic channeled support layer; and

(e) a second outer support layer comprising porous mixed-conducting multi-component metal oxide material and having an inner side and an outer side, wherein the inner side is in contact with the outer side of the second dense layer.

7. The planar ceramic membrane assembly of Item 6 wherein the dense layers and the porous layers are formed of multi-component metal oxide material with the same composition.

8. The planar ceramic membrane assembly of Item 6 wherein the dense layers, the channeled support layers, and the porous layers are formed of multi-component metal oxide material with the same composition.

9. A method of making a planar ceramic membrane assembly comprising

(a) providing a green planar ceramic membrane structure comprising

(1) a planar green ceramic channeled support layer having a first side and a second side;

(2) a first green layer of mixed-conducting multi-component metal oxide material having an inner side and an outer side, wherein portions of the inner side are in contact with the first side of the green ceramic channeled support layer;

(3) a first green outer support layer comprising porous mixed-conducting multi-component metal oxide material and having an inner side and an outer side, wherein the inner side is in contact with the outer side of the first green layer,

(4) a second green layer of mixed-conducting multi-component metal oxide material having an inner side and an outer side, wherein portions of the inner side are in contact with the second side of the green ceramic channeled support layer; and

(5) a second green outer support layer comprising porous mixed-conducting multi-component metal oxide material and having an inner side and an outer side, wherein the inner side is in contact with the outer side of the second green layer; and

(b) firing the green planar ceramic membrane structure at combination of time and temperature sufficient to yield a sintered planar ceramic membrane structure and to convert the first and second green layers of mixed-conducting multi-component metal oxide material into dense layers of mixed-conducting multi-component metal oxide material having an average grain size in the range of about 4 μm to about 20 μm.

10. The method of Item 9 wherein the firing of the green planar ceramic membrane structure is effected at temperatures in the range of 1000-1600°C with firing times between 0.5 and 12 hr.

11. The method of Item 9 which comprises

(1) assembling a plurality of sintered planar ceramic membrane structures into a stack by placing green ceramic spacers between pairs of sintered planar ceramic membrane structures with a joining compound disposed between and in contact with adjacent spacers and ceramic membrane structures, thereby forming an assembled stack, and

(2) firing the assembled stack at combination of time and temperature sufficient to sinter the green spacers and join the spacers and sintered planar ceramic membrane structures to form a membrane module.

12. A method of making a planar ceramic membrane module comprising

(a) providing a plurality of green planar ceramic membrane structures, each structure comprising

(1) a planar green ceramic channeled support layer having a first side and a second side;

(2) a first green layer of mixed-conducting multi-component metal oxide material having an inner side and an outer side, wherein portions of the inner side are in contact with the first side of the green ceramic channeled support layer;

(3) a first green outer support layer comprising porous mixed-conducting multi-component metal oxide material and having an inner side and an outer side, wherein the inner side is in contact with the outer side of the first green layer,

(4) a second green layer of mixed-conducting multi-component metal oxide material having an inner side and an outer side, wherein portions of the inner side are in contact with the second side of the green ceramic channeled support layer; and

(5) a second green outer support layer comprising porous mixed-conducting multi-component metal oxide material and having an inner side and an outer side, wherein the inner side is in contact with the outer side of the second green layer; and

(b) assembling the plurality of green planar ceramic membrane structures into a stack by placing a green ceramic spacer between each pair of green planar ceramic membrane structures with a joining compound disposed between adjacent green spacers and green planar ceramic membrane structures, thereby forming a green assembled stack, and

(c) firing the green assembled stack at a combination of time and temperature sufficient to

(1) sinter the green planar ceramic membrane structures to convert the first and second green layers of mixed-conducting multi-component metal oxide material into dense layers of mixed-conducting multi-component metal oxide material having an average grain size in the range of about 4 μm to about 20 μm,

(2) sinter the green spacers, and

(3) join the spacers and planar ceramic membrane structures to form the planar ceramic membrane module.

13. The method of Item 12 wherein the firing of the green assembled stack is effected at temperatures in the range of 1000-1600°C with firing times between 0.5 and 12 hr.

14. A hydrocarbon oxidation process comprising

(a) providing a planar ceramic membrane reactor assembly comprising a dense layer of mixed-conducting multi-component metal oxide material, wherein the dense layer has a first side, a second side, and an average grain size in the range of about 4 $\mu$m to about 20 $\mu$m; a support layer comprising porous mixed-conducting multi-component metal oxide material in contact with the first side of the dense layer; and a ceramic channeled support layer in contact with the second side of the dense layer;

(b) passing a heated oxygen-containing oxidant feed gas through the ceramic channeled layer and in contact with the second side of the dense layer;

(c) permeating oxygen ions through the dense layer and providing oxygen on the first side of the dense layer;

(d) contacting a heated hydrocarbon-containing feed gas with the support layer wherein the hydrocarbon-containing feed gas diffuses through the support layer; and

(e) reacting the hydrocarbon-containing feed gas with the oxygen to yield a hydrocarbon oxidation product.

15. The hydrocarbon oxidation process of Item 14 wherein the hydrocarbon-containing feed gas comprises one or more hydrocarbon compounds containing between one and six carbon atoms.

16. The hydrocarbon oxidation process of Item 14 wherein the oxygen-containing oxidant feed gas is selected from the group consisting of air, oxygen-depleted air, and combustion products containing oxygen, nitrogen, carbon dioxide, and water.

17. The hydrocarbon oxidation process of Item 14 wherein the hydrocarbon oxidation product comprises oxidized hydrocarbons, partially oxidized hydrocarbons, hydrogen, and water.

**Claims**

1. A mixed conducting ion transport membrane comprising a multi-component metallic oxide compound represented by the formula $Ln_xA'_{x'}A''_{x''}B_yB'_{y'}O_{3-z}$ wherein

    (a) Ln is an element selected from the f block lanthanides, A' is selected from Group 2, A'' is selected from Groups 1, 2 and 3 and the f block lanthanides, and B and B' are independently selected from the d block transition metals, excluding titanium and chromium, wherein $0 \leq x < 1$, $0 < x' \leq 1$, $0 \leq x'' < 1$, $0 < y < 1.1$, $0 \leq y' < 1.1$, $x+x'+x''=1.0$, $1.1 > y+y' \geq 1.0$ and z is a number which renders the compound charge neutral, and
    (b) the average grain size of the multi-component metallic oxide is in the range of about 4 $\mu$m to about 20 $\mu$m.

2. The mixed conducting ion transport membrane of Claim 1 wherein the multi-component metallic oxide compound is represented by the formula $(Ln_xCa_{1-x})_yFeO_{3-z}$ wherein Ln is La or a mixture of lanthanides comprising La, $1.0 > x > 0.5$, and $1.1 \geq y \geq 1.0$.

3. A planar ceramic membrane assembly comprising a dense layer of mixed-conducting multi-component metal oxide material, wherein the dense layer has a first side, a second side, and an average grain size in the range of about 4 $\mu$m to about 20 $\mu$m; a porous layer of mixed-conducting multi-component metal oxide material in contact with the first side of the dense layer; and a ceramic channeled support layer in contact with the second side of the dense layer.

4. A planar ceramic wafer assembly comprising

    (a) a planar ceramic channeled support layer having a first side and a second side;
    (b) a first dense layer of mixed-conducting multi-component metal oxide material having an inner side, an outer side, and an average grain size in the range of about 4 $\mu$m to about 20 $\mu$m, wherein portions of the inner side are in contact with the first side of the ceramic channeled support layer;
    (c) a first outer support layer comprising porous mixed-conducting multi-component metal oxide material and having an inner side and an outer side, wherein the inner side is in contact with the outer side of the first dense layer,
    (d) a second dense layer of mixed-conducting multi-component metal oxide material having an inner side, an outer side, and an average grain size in the range of about 4 $\mu$m to about 20 $\mu$m, wherein portions of the inner side are in contact with the second side of the ceramic channeled support layer; and

(e) a second outer support layer comprising porous mixed-conducting multi-component metal oxide material and having an inner side and an outer side, wherein the inner side is in contact with the outer side of the second dense layer.

5. The planar ceramic assembly of any of Claims 3 to 4 wherein the dense layer and the porous layer is formed of multi-component metal oxide material with the same composition.

6. The planar ceramic assembly of any of Claims 3 to 4 wherein the dense layer, the channeled support layer, and the porous layer is formed of multi-component metal oxide material with the same composition.

7. A method of making a planar ceramic membrane assembly comprising

(a) providing a green planar ceramic membrane structure comprising

(1) a planar green ceramic channeled support layer having a first side and a second side;
(2) a first green layer of mixed-conducting multi-component metal oxide material having an inner side and an outer side, wherein portions of the inner side are in contact with the first side of the green ceramic channeled support layer;
(3) a first green outer support layer comprising porous mixed-conducting multicomponent metal oxide material and having an inner side and an outer side, wherein the inner side is in contact with the outer side of the first green layer,
(4) a second green layer of mixed-conducting multi-component metal oxide material having an inner side and an outer side, wherein portions of the inner side are in contact with the second side of the green ceramic channeled support layer; and
(5) a second green outer support layer comprising porous mixed-conducting multi-component metal oxide material and having an inner side and an outer side, wherein the inner side is in contact with the outer side of the second green layer; and

(b) firing the green planar ceramic membrane structure at combination of time and temperature sufficient to yield a sintered planar ceramic membrane structure and to convert the first and second green layers of mixed-conducting multi-component metal oxide material into dense layers of mixed-conducting multi-component metal oxide material having an average grain size in the range of about 4 $\mu$m to about 20 $\mu$m.

8. The method of Claim 7 wherein the firing of the green planar ceramic membrane structure is effected at temperatures in the range of 1000-1600°C with firing times between 0.5 and 12 hr.

9. The method of any of Claims 7 to 8 which comprises

(1) assembling a plurality of sintered planar ceramic membrane structures into a stack by placing green ceramic spacers between pairs of sintered planar ceramic membrane structures with a joining compound disposed between and in contact with adjacent spacers and ceramic membrane structures, thereby forming an assembled stack, and
(2) firing the assembled stack at combination of time and temperature sufficient to sinter the green spacers and join the spacers and sintered planar ceramic membrane structures to form a membrane module.

10. A method of making a planar ceramic membrane module comprising

(a) providing a plurality of green planar ceramic membrane structures, each structure comprising

(1) a planar green ceramic channeled support layer having a first side and a second side;
(2) a first green layer of mixed-conducting multi-component metal oxide material having an inner side and an outer side, wherein portions of the inner side are in contact with the first side of the green ceramic channeled support layer;
(3) a first green outer support layer comprising porous mixed-conducting multi-component metal oxide material and having an inner side and an outer side, wherein the inner side is in contact with the outer side of the first green layer,
(4) a second green layer of mixed-conducting multi-component metal oxide material having an inner side and an outer side, wherein portions of the inner side are in contact with the second side of the green ceramic channeled support layer; and

(5) a second green outer support layer comprising porous mixed-conducting multi-component metal oxide material and having an inner side and an outer side, wherein the inner side is in contact with the outer side of the second green layer; and

(b) assembling the plurality of green planar ceramic membrane structures into a stack by placing a green ceramic spacer between each pair of green planar ceramic membrane structures with a joining compound disposed between adjacent green spacers and green planar ceramic membrane structures, thereby forming a green assembled stack, and

(c) firing the green assembled stack at a combination of time and temperature sufficient to

(1) sinter the green planar ceramic membrane structures to convert the first and second green layers of mixed-conducting multi-component metal oxide material into dense layers of mixed-conducting multi-component metal oxide material having an average grain size in the range of about 4 $\mu$m to about 20 $\mu$m,

(2) sinter the green spacers, and

(3) join the spacers and planar ceramic membrane structures to form the planar ceramic membrane module.

**11.** The method of Claim 10 wherein the firing of the green assembled stack is effected at temperatures in the range of 1000-1600°C with firing times between 0.5 and 12 hr.

**12.** A hydrocarbon oxidation process comprising

(a) providing a planar ceramic membrane reactor assembly comprising a dense layer of mixed-conducting multi-component metal oxide material, wherein the dense layer has a first side, a second side, and an average grain size in the range of about 4 $\mu$m to about 20 $\mu$m; a support layer comprising porous mixed-conducting multi-component metal oxide material in contact with the first side of the dense layer; and a ceramic channeled support layer in contact with the second side of the dense layer;

(b) passing a heated oxygen-containing oxidant feed gas through the ceramic channeled layer and in contact with the second side of the dense layer;

(c) permeating oxygen ions through the dense layer and providing oxygen on the first side of the dense layer;

(d) contacting a heated hydrocarbon-containing feed gas with the support layer wherein the hydrocarbon-containing feed gas diffuses through the support layer; and

(e) reacting the hydrocarbon-containing feed gas with the oxygen to yield a hydrocarbon oxidation product.

**13.** The hydrocarbon oxidation process of Claim 12 wherein the hydrocarbon-containing feed gas comprises one or more hydrocarbon compounds containing between one and six carbon atoms.

**14.** The hydrocarbon oxidation process of any of Claims 12 to 13 wherein the oxygen-containing oxidant feed gas is selected from the group consisting of air, oxygen-depleted air, and combustion products containing oxygen, nitrogen, carbon dioxide, and water.

**15.** The hydrocarbon oxidation process of any of Claims 12 to 14 wherein the hydrocarbon oxidation product comprises oxidized hydrocarbons, partially oxidized hydrocarbons, hydrogen, and water.

Side of lower
oxygen chemical
potential ($P_{O2}'$)

$A^{2+}$ ⟶

$B^{2+}$ ⟶

(A,B)O membrane

Side of higher
oxygen chemical
potential ($P_{O2}''$)

Slower moving cation $B^{2+}$
enriches this surface.
Surface also becomes
porous

Faster moving cation
$A^{2+}$ enriches this
surface

FIG. 1

FIG. 2

# FIG. 3

319    319

301

305

321    313

309    313

329    311    329

307

303

325    325

315

317

# FIG. 4A

301

305

315

309    331    333

307

317

303

# FIG. 4B

FIG. 5

FIG. 6

Europäisches Patentamt
European Patent Office
Office européen des brevets

# EUROPEAN SEARCH REPORT

Application Number

EP 08 16 8334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/191408 A1 (S. GOPALAN ET AL.) 31 August 2006 (2006-08-31) * paragraphs [0008] - [0010], [0042], [0043], [0055], [0058]; claims 1-37 * | 1,2 | INV. B01D71/02 B01D53/22 C04B35/26 B01J12/00 B01J19/24 |
| X | US 6 146 549 A (ELTRON RESEARCH, INC.) 14 November 2000 (2000-11-14) * column 13, line 39 - line 61 * * column 2, line 33 - column 3, line 43; claims 1,9; examples 1-7 * | 1,2 | |
| X | US 6 872 331 B2 (MITSUBISHI MATERIALS CORP.Q) 29 March 2005 (2005-03-29) * column 3, line 11 - column 4, line 25 * * column 6, line 55 - column 7, line 13; claims 1-23 * | 1,2 | |
| X | WO 2007/086949 A (TRUSTEES OF BOSTON UNIVERSITY) 2 August 2007 (2007-08-02) * paragraphs [0003], [0013], [0019] - [0023], [0044], [0046] - [0053], [0056]; claims 1-29; figures 3-7; example 1 * | 3-15 | TECHNICAL FIELDS SEARCHED (IPC) B01D B01J C01B C04B |
| X | US 2003/054154 A1 (PRAXAIR, INC.) 20 March 2003 (2003-03-20) * paragraphs [0014], [0017], [0018], [0025], [0027], [0038] - [0040]; claims 1-18; examples 1,2 * | 3 | |

The present search report has been drawn up for all claims

| Place of search | Date of completion of the search | Examiner |
|---|---|---|
| Munich | 6 March 2009 | Luethe, Herbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 08 16 8334

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 08 16 8334

The Search Division considers that the present European patentapplication does not comply with the requirements of unity of invention and relates to severalinventions or groups of inventions, namely:

1. claims: 1, 2

A conducting ion transport ceramic membrane.
---

2. claims: 3-11

Planar ceramic membrane assemblies and planar ceramic wafer assemblies and methods of making them.
---

3. claims: 12-15

A hydrocarbon oxidation process.
---

**ANNEX TO THE EUROPEAN SEARCH REPORT
ON EUROPEAN PATENT APPLICATION NO.**

EP 08 16 8334

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2009

| Patent document cited in search report | | Publication date | Patent family member(s) | | Publication date |
|---|---|---|---|---|---|
| US 2006191408 | A1 | 31-08-2006 | NONE | | |
| US 6146549 | A | 14-11-2000 | AT | 312663 T | 15-12-2005 |
| | | | AU | 6522800 A | 05-03-2001 |
| | | | DE | 60024856 T2 | 31-08-2006 |
| | | | DK | 1224149 T3 | 01-05-2006 |
| | | | EP | 1224149 A1 | 24-07-2002 |
| | | | WO | 0110775 A1 | 15-02-2001 |
| US 6872331 | B2 | 29-03-2005 | US | 2004026668 A1 | 12-02-2004 |
| WO 2007086949 | A | 02-08-2007 | EP | 1954379 A2 | 13-08-2008 |
| US 2003054154 | A1 | 20-03-2003 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7279027 B
- US 7279027 B2
- US 7179323 B2